# EUROPÄISCHE PATENTSCHRIFT

(11) **EP 2 618 180 B1**
(45) Veröffentlichungstag und Bekanntmachung des Hinweises auf die Patenterteilung: **19.03.2014**
(21) Anmeldenummer: 12000403.1
(22) Anmeldetag: 23.01.2012
(51) Int. Cl.: G01S 17/36, G01S 7/481, G01S 17/89, G01S 7/486

(54) **Sensorvorrichtung, Herstellungsverfahren und Detektionsvorrichtung**
Sensor device, production method and detection device
Dispositif de capteur, procédé de fabrication et dispositif de détection

(43) Veröffentlichungstag der Anmeldung: 24.07.2013
(73) Patentinhaber: Espros Photonics AG, 7320 Sargans (CH)
(72) Erfinder: De Coi, Beat, 7320 Sargans (CH); Popp, Martin, Dr., 7000 Chur (CH)
(74) Vertreter: Otten, Roth, Dobler & Partner

(56) Entgegenhaltungen:
- US-A1- 2008 165 620
- US-A1- 2008 239 466
- US-B1- 7 636 150
- YOKOYAMA A ET AL: "Realtime range imaging using adjustment-free photo-VLSI-silicon range finder", INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, Bd. 3, 12. September 1994 (1994-09-12), Seiten 1751-1758, XP010142066, DOI: 10.1109/IROS.1994.407621 ISBN: 978-0-7803-1933-2
- MASAAKI SASAKI ET AL: "A Wide-Dynamic-Range CMOS Image Sensor Based on Multiple Short Exposure-Time Readout With Multiple-Resolution Column-Parallel ADC", IEEE SENSORS JOURNAL, IEEE SERVICE CENTER, NEW YORK, NY, US, Bd. 7, Nr. 1, 1. Januar 2007 (2007-01-01), Seiten 151-158, XP011152878, ISSN: 1530-437X, DOI: 10.1109/JSEN.2006.888058

## Beschreibung

Die Erfindung betrifft eine Sensorvorrichtung, insbesondere eine Time-of-flight- (TOF-) und/oder CCD-Sensorvorrichtung für einen 3-D-Kamerasensor nach dem Oberbegriff des Anspruchs 1, ein Verfahren zur Herstellung der Sensorvorrichtung nach dem Oberbegriff des Anspruchs 13 sowie eine Detektionsvorrichtung nach dem Oberbegriff des Anspruchs 15.

Während einerseits ein allgemeiner Trend zu immer stärkeren Miniaturisierungen im Chipdesign besteht, sind andererseits viele Chips und optoelektronische Sensorvorrichtungen nur sehr eingeschränkt einsetzbar und müssen zum Teil aufwendig unter Bereitstellung einiger Peripheriegeräte in Kameras oder andere Sensoreinrichtungen implementiert werden. Schwierigkeiten können insbesondere auftreten, weil entsprechende Sensoreinrichtungen zu groß und zu aufwendig sind, aber vielfach auch in Bezug auf die anwendungsbezogenen Anforderungen die nötige Robustheit fehlt.

Aus dem Stand der Technik ist aus der US 7,636,150 B1 ein TOF-System mit verbesserter Frequenzkontrolle bekannt, bei dem der Zeitgeber über einen Hochgeschwindigkeitsoszillator verfügt und mit der Detektionseinheit des TOF-Systems und dem TOF-Timer gekoppelt ist; dabei ist der Zeitgeber wiederum gekoppelt an eine sogenannte Delay-locked-loop bzw. eine Phase-locked-loop. Des Weiteren sind aus dem Stand der Technik verschiedene bildgebende Sensoren bekannt, wie z. B. aus den Fachzeitschriftenartikeln von YOKOYAMA et al.: "Realtime Range Imaging using Adjustment-Free Photo-VLSI - Silicon Range Finder -", Intelligent robots and systems '94 "advanced robotic systems and the real world" IROS '94, proceedings of the ieee/rsj/gi International Conference on Munich, Germany 12-sept. 1994, New York, USA, ieee, Band 3, 12. September 1994, Seiten 1751 bis 1758, DOI: 10.1109/IROS. 1994. 407621, ISBN: 978-07803-1933-2 sowie MASAAKI Sasaki et al.: A Wide-Dynamic-Range CMOS Image Sensor Based on Multiple Short Exposure-Time Readout With Multiple-Resolution Column-Parallel ADC", ieee Sensors Journal, ieee Service Center, New York, US, Band 7, Nr. 1, 1.1.2007, Seiten 151 - 158, ISSN: 1530-437X, DOI: 10.1109/JSEN. 2006. 888058.

Aufgabe der Erfindung ist es, eine Sensorvorrichtung sowie ein Verfahren zu deren Herstellung vorzuschlagen, die eine verbesserte Integration in anwendungsbasierte Sensoreinrichtungen bzw. Detektionsvorrichtungen ermöglicht.

Die Aufgabe wird, ausgehend von einer Sensorvorrichtung sowie einem Verfahren zu deren Herstellung bzw. einer Detektionsvorrichtung der eingangs genannten Art, durch die kennzeichnenden Merkmale des Anspruchs 1, des Anspruchs 12 sowie des Anspruchs 15 gelöst.

Durch die in den abhängigen Ansprüchen genannten Maßnahmen sind vorteilhafte Ausführungen und Weiterbildungen der Erfindung möglich.

Dementsprechend zeichnet sich eine erfindungsgemäße Sensorvorrichtung dadurch aus, dass die Schaltkreiskomponenten einschließlich dem Analog-Digital-Wandler als integrierter Schaltkreis in einen Chip integriert sind, wobei der Chip in 1-Poly-Technologie gefertigt ist.

Bei der erfindungsgemäßen Sensorvorrichtung handelt es sich insbesondere um einen Time-of-flight- (ToF-) und/oder eine CCD- (Engl.: Charge coupled device) Sensorvorrichtung für einen 3-D-Kamerasensor. Eine typische industrielle Anwendung besteht beispielsweise darin, eine Überwachungsvorrichtung für eine Tür, ein Torsystem oder dergleichen bereitzustellen. Die Erfindung ermöglicht, ein so genanntes System-on-Chip (SoC) für eine pixelbasierte Erfassung eines 3-D-Raumes zur Verfügung zu stellen, welche insbesondere auch für Industrieanwendungen geeignet ist. Die Sensorvorrichtung kann als Kernstück einer 3-D-Kamera, also als 3-D-Kamerasensor dienen, wobei sie vorzugsweise als Time-of-flight- bzw. CCD-Sensorvorrichtung ausgebildet ist.

Die erfindungsgemäße Sensorvorrichtung umfasst wenigstens eine analoge und digitale Schaltkreiskomponente sowie einen Analog-/Digital-Wandler zum Wandeln analoger Signale der analogen Schaltkreiskomponenten in digitale Signale für die digitale Schaltkreiskomponente. Beide Arten von Schaltkreiskomponenten, nämlich analoge und digitale Schaltkreiskomponenten, umfassen jeweils so genannte Module, welche eine elektronische Ausführung einer Funktion (z.B. Datenverarbeitung, Datenspeicherung, Treiberfunktionen, Phasenabgleich, Verstärkungen usw.) ermöglichen. Ein Modul der analogen Schaltkreiskomponente ist bei der erfindungsgemäßen Sensorvorrichtung als Sensoreinrichtung zur Detektion elektromagnetischer Strahlung, insbesondere IR-Strahlung, ausgebildet. Vorzugsweise kommen Anwendungen im Bereich der optischen bzw. optoelektronischen Sensorik in Betracht (z.B. im sichtbaren Bereich (ca. 400 nm -800 nm Wellenlänge), Ultraviolett- (UV) bzw. IR-Bereich). Gerade bei Überwachungssystemen kann es sich regelmäßig um die Detektion von Infrarotstrahlung (IR-Strahlung) handeln. Eine wichtige Funktion von Modulen der analogen Schaltkreiskomponente sind somit vor allem die im eigentlichen Sensor (ToF-Sensor, CCD) stattfindende Beeinflussung bzw. der Transport freier Ladungsträger (Engl.: free-charge handling).

Wenigstens ein Modul der digitalen Schaltkreiskomponente ist darüber hinaus als Signalverarbeitungseinrichtung zur Verarbeitung digitaler Signale ausgebildet, eine so genannte Digitaldomain zur Signalverarbeitung. Weitere Funktionen, die von zusätzlichen Modulen der digitalen Schaltkreiskomponente ausgeführt werden können, betreffen zum Beispiel die Phasenmodulation, Messen und Regeln von Phasenverschiebungen, sofern diese Funktionen beispielsweise für Time-of-flight-Messungen benötigt werden.

Durch die Maßnahme, dass die Sensorvorrichtung in einem einzigen Chip integriert ist und somit eine System-on-Chip-Lösung bereitgestellt wird, kann die erfindungsgemäße Sensorvorrichtung besonders gut in verschiedenste Sensoren, Sensorvorrichtungen, Kameras, Überwachungsvorrichtungen usw. integriert werden. Neben der Benutzerfreundlichkeit, welche diese Integration ermöglicht, bietet die erfindungsgemäße Vorrichtung zudem auch Kostenvorteile, da die einzelnen, mitunter teuren Funktionsmodule bereits in dem einen Chip integriert sind. Insbesondere bietet die erfindungsgemäße Sensorvorrichtung bzw. das erfindungsgemäße System-on-Chip eine besondere Platzersparnis, durch welche die Integrationsmöglichkeiten in die verschiedensten Anwendungssysteme zudem noch erhöht werden.

Die erfindungsgemäße Sensorvorrichtung in Form eines System-on-Chip ermöglicht folglich die Integration von Modulen für alle für einen Sensor wichtigen Funktionen, wodurch sie besonders vorteilhaft in verschiedenste Systeme implementiert werden kann. Dadurch kann zum Beispiel eine Detektionsvorrichtung, welche die erfindungsgemäße Sensorvorrichtung verwendet, besondere Robustheit in Bezug auf unterschiedlichste anwendungsbezogene Anforderungen (Umgebungslicht, Erfassung von Objekten mit unterschiedlichen optischen Eigenschaften wie z.B. Reflexionsvermögen) erfüllen.

Die erfindungsgemäße Sensorvorrichtung bzw. das erfindungsgemäße System-on-Chip ist in 1-Poly-Technologie (Engl.: single-polysilicon technology) gefertigt. Gestapelte Doppelstrukturen (2-Poly) werden damit vermieden, der Aufbau wird damit grundsätzlich flacher und zudem weniger komplex. Der gesamte Chip, insbesondere auch die CCD, kann gemäß der Erfindung entsprechend in 1-Poly-Technik hergestellt werden. Üblicherweise werden CCD-Chips in 2-Poly-Technolgie gerfertigt.

Besonders bevorzugt ist die Integrierung eines nicht flüchtigen Speichers (Engl.: non-volatile memory) auf dem Chip zur Speicherung von Konfigurationsparamentern, insbesondere eines EEPROM (engl.: Electrically erasable programmable readonly memory). Dies ermöglicht einen entscheidenden Schritt zu einem voll integrierten System-on-Chip, das nicht nur eine kompakte und platzsparende Bauweise besitzt, sondern auch selbst wiederum hervorragend in Sensoren und Messvorrichtungen integriert werden kann. Zudem kann die Robustheit eines solchen voll integrierten Variante gemäß der Erfindung deutlich gegenüber herkömmlichen Sensorvorrichtungen erhöht sein.

Das EEPROM kann in einer vorteilhaften Weiterbildung der Erfindung als FGFET (engl.: Floating gate field effect transistor) ausgebildet sein. Eine derartige FGFET-Struktur weist jeweils einen Source- und Drain-Anschluss auf, sowie zusätzlich einen Steueranschluss, das sogenannte Control gate. Im Bereich des Control-Gate befindet sich ein Bereich der als Floating-Gate bezeichnet wird. In diesem Bereich des Floating-Gates können Ladungen dauerhaft "abgespeichert" werden. Je nach Ladungszustand des Floating-Gate-Bereichs ist die Source-Drain-Strecke hochohmig oder niederohmig. Dieser Unterschied kann beispielsweise zur Codierung der zu speichernden Information verwendet werden.

Ein entsprechender FGFET ist dann ebenfalls als 1-Poly-Struktur ausgebildet. Das Control-Gate ist folglich nicht als Doppelstruktur, bei der sich unterhalb des Control-Gates das Floating-Gate befindet, welches über ein Gateoxid vom übrigen Bulkmaterial abtrennt, sondern das Floating-Gate ist vielmehr als eine Schicht ausgebildet, die sich auch über den Bereich von Source nach Drain hin erstreckt. Der Gereich des Control-Gate kann vom Bereich der Source-Drain-Strecke dabei über einen weiteren Feldoxidbereich abgetrennt sein. Das Control-Gate kann in der Bulkstruktur außerhalb der Source-Drain-Strecke angeordnet sein.

Da das Floating-Gate in 1-Poly-Bauweise mit dem Control-Gate keine Stapelstruktur bildet, kann die Gatestruktur insbesondere auch ein Control-Gate in Form einer vergrabenen Schicht (Engl.: buried control gate) umfassen, welche im Bulkmaterial des Halbleiters selbst angeordnet ist (Ausführungen: z.B. ETOX, FLOTOX). Bei dieser vorgeschlagenen Bauweise kann zudem auch Material für die Oxidschicht eingespart werden, dass ansonsten bei einer 2-Poly-Sturkur zur Isolation benötigt würde.

Bei einer bevorzugten Ausführungsform der Erfindung werden in der analogen Schaltkreiskomponente subnominale Spalten ausgebildet, während in der digitalen Schaltkreiskomponente subnominale Linien gefertigt werden. Der Begriff "subnominal" bedeutet unterhalb der kritischen Dimension, d.h. unterhalb der kleinsten, direkt produzierbaren Strukturbreite. Als Herstellungsverfahren für diese Linien und Spalten dient das so genannte bi-subnominale-Ätzverfahren (Engl.: bi-subnominal etching), welches ermöglicht, besonders schmale Strukturen zu erzeugen, die mit herkömmlichen Etching-Verfahren und den dazugehörigen Masken nicht erreicht werden können. Durch dieses Verfahren können Strukturen erzeugt werden, die unter den minimalen kritischen Dimensionen liegen, die für einen Maskenschritt üblicherweise erreichbar sind. Durch diese schmalen Strukturen wird bei Halbleiterstrukturelementen wie EEPROMs oder CCDs ermöglicht, Ladungsträgerpakete über Felder beeinflussen zu können, da die Abstände entsprechend gering ausgebildet sein können, ohne dass Strukturüberlappungen oder ähnliche Maßnahmen notwendig sind. Dieses Herstellungsverfahren eignet sich somit besonders dazu, möglichst kleine Strukturen herzustellen, wie sie beispielsweise bei CCDs vielfach erwünscht sind, um einen möglichst geringen Abstand zwischen den Gatestrukturen zu erreichen.

Die digitalen Schaltkreiskomponenten können entsprechend schmale Linien umfassen, z.B. also für kurze Transistoren, um eine dichte Packung an Transistoren zu ermöglichen und somit hohe Leistung bei der Signalverarbeitung erzielen zu können.

Ferner benötigen die analogen Schaltkreiskomponenten schmale Spalten zur Beeinflussung und zum Transport von freien Ladungsträgern über Felder sowie zur Detektion von Ladungspaketen (so genanntes free-charge handling).

Der Analog-/Digital-Wandler hingegen weist vorteilhafterweise wegen der Toleranz gegenüber hohen Spannungen breite Linien auf.

Hinsichtlich des Aufbaus der Halbleiterstruktur der Sensorvorrichtung ist im Übrigen grundsätzlich denkbar, dass analoge und digitale Schaltkreiskomponenten durch so genannte Guard-Ringe getrennt sind. Bei derartigen Guard-Ringen handelt es sich um hochdotierte Ringstrukturen, die abzugrenzende Halbleiter-Strukturbereiche umgeben, sodass damit die parasitären Widerstände sinken können und andererseits wiederum vagabundierende Ladungsträger von den Guard-Ringen abgefangen werden können. Darüber hinaus kann verhindert werden, dass abzuschirmende Halbleiterstrukturen infolge parasitärer Effekte angesteuert werden. Des Weiteren können auch einzelne Module von Guard-Ringen abgetrennt werden.

Es können eine Reihe von Modulen auf dem Chip gemäß der Erfindung integriert werden. Die digitale Schaltkreiskomponente kann bei einem Ausführungsbeispiel zudem wenigstens einen der folgenden Module (neben der Digitaldomain zur Signalverarbeitung, dem AD-Wandler sowie dem nichtflüchtigen Speicher) umfassen:
- eine Vorrichtung zur Kontrolle einer Phasenverschiebung, insbesondere eine DLL (engl.: Delay-locked loop),
- einen Zeitgeberschwingkreis, insbesondere eine PLL (engl.: Phase-locked-loop).

Zusätzlich kann die analoge Schaltkreiskomponente wenigstens eines der folgenden Module (neben dem Sensor und Modulen zum so genannten Free-charge Handling) umfassen:
- einen Sensor zur Detektion von Strahlung samt Struktur zum Transport von induzierten freien Ladungsträgern,
- ein Verstärker
- ein Spannungsregler
- ein Spannungswandler
- einen Temperatursensor.

Bei einer besonders bevorzugten Ausführungsform der Erfindung können auf einer Sensorvorrichtung gemäß der Erfindung als voll integriertes System-on-Chip folgende analogen und digitalen Module zusammen integriert sein: eine ToF-Pixelmatrix zur optischen Detektion, eine Spannungsversorgung bzw. Spannungsregulierung, der nicht-flüchtige Speicher für die entsprechende Konfiguration, ein LED-Treiber bzw. eine LED-Steuerung für die aktive Beleuchtung durch die Sensorvorrichtung, ein digitales SPI-Interface zur Kommunikation, der A-/D-Wandler, die PLL und weitere Daten verarbeitende oder zur flüchtigen Datenspeicherung verwendbare Elektronikkomponenten.

Die DLL kann beispielsweise die Phasenverschiebung zwischen LED und LED-Treiber selbständig messen und regeln. Der Zeitgeber wird durch einen entsprechenden Zeitgeberschwingkreis (PLL) stabilisiert.

Bei dem Sensor zur Strahlungsdetektion handelt es sich zum Beispiel um eine Pixel-Matrix, die als CCD ausgebildet ist, und strahlungsinduzierte freie Ladungsträger über Felder beeinflusst und transportiert. Ein Temperatursensor wiederum kann dazu vorgesehen sein, eine Korrektur des Temperaturdrifts der gesamten Sensorvorrichtung vorzunehmen, wobei zum Beispiel entsprechende Kalibrierungsdaten, die als Konfigurationsparameter im EEPROM gespeichert sind, dazu verwendet zu werden. Dadurch, dass all diese Module in einem einzigen System-on-Chip vereint werden können, können zudem teure und platzraubende Peripheriekomponenten wie FPGAs (Engl.: field-programmable gate array) zur Abarbeitung logischer , A-/D-Wandler, Komponenten zur Stromversorgung usw. eingespart werden.

Die digitalen Schaltkreiskomponenten können grundsätzlich in CMOS-Prozessen (Engl.: complementary metal-oxide semiconductor) gefertigt werden.

Im vorliegenden Fall wird für eine Sensorvorrichtung gemäß der Erfindung ein besonderer CMOS-Prozess vorgeschlagen, der sich durch einige Vorteile, gerade im Bereich der Infrarotdetektion gegenüber Standard-CMOS-Verfahren auszeichnet. Handelsübliche Standard-CIS-Sensoren (Abkürzung für "CMOS Image Sensor") umfassen so genannte gepinnte Photodioden, deren photoempfindlicher Detektionsbereich nur eine Dicke von wenigen Mikrometern umfasst, also geringer ist als die Absorptionslänge von Licht einer Wellenlänge von 850 Nanometern in Silizium, nämlich einer Absorptionslänge von etwa 13 Mikrometer. Die hohe Quantenausbeute bei den nunmehr vorgeschlagenen CMOS-Komponenten wird ermöglicht zum einen durch eine Beleuchtung der Komponenten von der Rückseite (back-side illumination) sowie die äußerst kurzen Erfassungszeiten für die gebildeten Ladungsträger einer Detektion.

Die CCD-Sensoreinrichtung kann zum Beispiel wie folgt aufgebaut sein: Die Halbleiterstruktur zur Photonendetektion umfasst ein Substrat aus einem Halbleitermaterial mit einer ersten Dotierung, einen Kontaktbereich, der an der Vorderseite des Substrates angebracht ist, eine Bias-Schicht aus einem Halbleitermaterial mit einer zweiten Dotierung, welche auf der Rückseite des Substrats beabstandet vom Kontaktbereich angeordnet ist, wobei der Kontaktbereich wenigstens teilweise der Bias-Schicht gegenüberliegt, so dass in lateraler Richtung ein Überlappbereich vorhanden ist, ein Guardring, der auf der Vorderseite des Substrats angeordnet ist und den Kontaktbereich umgibt, wobei zwischen dem Kontaktbereich und dem Guardring eine Sperrspannung anlegbar ist, dadurch aus, dass der Überlappbereich eine laterale Ausdehnung aufweist, die wenigstens ein Viertel der Distanz zwischen dem Kontaktbereich und der Bias-Schicht beträgt. Durch dieses Größenverhältnis kann nicht nur das Potential im Bulkmaterial durch das am Kontaktbereich angelegte Potential beeinflusst werden, sondern ebenfalls das Potential der Bias-Schicht. Es entsteht ein Potentialkanal, ein Leitungskanal zwischen dem Kontaktbereich und der gegenüberliegenden Bias-Schicht. Das Bulkmaterial kann für die Sensorvorrichtungen im Zonenziehverfahren gewonnen werden (Engl.: float-zone silicon). Dieses Material zeichnet sich durch sehr geringe Störstellen und durch besondere Homogenität aus. Die Leitfähigkeit liegt bei mehreren hundert Ohm x Zentimeter (Ω cm) bis zu mehreren Kiloohm x Zentimeter (kΩ cm). Die Sensorvorrichtung gemäß der Erfindung bzw. die entsprechende Ausführungsform kann durch diese Maßnahmen nicht nur eine besonderes gute Detektion ermöglichen; diese Maßnahmen lassen auch zu, dass die Sensorvorrichtung für verschiedenste Bedingungen geeignet ist, etwa unter Einfluss von Umgebungslicht und bei unterschiedlichsten optischen Eigenschaften der zu erfassenden Objekte, die sich zudem auch bewegen können.

Aufgrund ihrer unterschiedlichen Funktionen können bei einem Ausführungsbeispiel der Erfindung die Schaltkreiskomponenten bzw. die jeweiligen Module der Schaltkreiskomponenten für verschiedene Spannungen ausgelegt sein. Eine Funktion von Modulen der analogen Schaltkreiskomponente besteht in der Detektion und Beeinflussung von Ladungspaketen (engl. free-charge handling). Das entsprechende Detektionsmodul ist beispielsweise Bestandteil des TOF-Sensors. Weitere Module der analogen Schaltkreiskomponente besitzen als Funktion unter anderem Spannungsregelung und Spannungswandlung, Temperaturerfassung, Verstärkung zur Unterdrückung von Untergrundrauschen, Module mit Treiberfunktion für die Leuchtdiode usw. Dementsprechend ist es vorteilhaft, dass die Module der analogen Schaltkreiskomponente für höhere Spannungen ausgelegt sind als die der digitalen Schaltkreiskomponente.

Die analogen und digitalen Schaltkreiskomponenten umfassen Halbleiterbauelemente, bei denen Oxidschichten zur elektrischen Isolierung eingesetzt werden. Ein Beispiel hierfür ist etwa das Gateoxid, welches zum Beispiel bei einem Transistor das Gate vom übrigen Bulkmaterial trennt bzw. isoliert. Daneben können auch andere Oxidschichten vorhanden sein, beispielsweise das Feldoxid oder sonstige Zwischenoxidschichten. Um dementsprechend bei analogen Schaltkreiskomponenten ein Durchschlagen der Spannung vermeiden zu können, sind vorteilhafterweise bei einer Weiterbildung der Erfindung Oxidschichten der analogen Schaltkreiskomponenten dicker ausgebildet als die der digitalen Schaltkreiskomponenten. Die Dicken des Gateoxids des EEPROM können kleiner gewählt werden als die Dicken der Gateoxidschichten der Module der analogen Schaltkreiskomponente, aber wiederum größer als die Dicken der Gateoxidschichten in Modulen der digitalen Schaltkreiskomponente, z.B. der Digitaldomain. Vorzugsweise besitzen die Gateoxidschichten der analogen Schaltkreiskomponenten eine Dicke von 9 nm bis 15 nm, die Gateoxidschicht des EEPROM eine Dicke von 6 nm bis 10 nm und die Gateoxidschicht der übrigen digitalen Schaltkreiskomponenten eine Dicke von 1,5 nm bis 3 nm (wobei: nm: Abkürzung für Nanometer).

Bei einer weiteren Ausführungsform der Erfindung umfasst die Sensorvorrichtung wenigstens eine analoge und digitale Schaltkreiskomponente sowie einen Analog-/Digital-Wandler zum Wandeln analoger Signale der analogen Schaltkreiskomponenten in digitale Signale für die digitale Schaltkreiskomponente und umgekehrt, d. h. der Analog-/Digital-Wandler ist insbesondere zusätzlich als Digital-/Analog-Wandler ausgebildet.

Darüber hinaus wird dementsprechend ein Verfahren zur Herstellung einer Sensorvorrichtung gemäß der Erfindung vorgeschlagen. Erfindungsgemäß kann wenigstens ein Teil des Verfahrens zur Herstellung ein 200-nm-CMOS-Fertigungsverfahren umfassen. Es handelt sich dabei um ein Fertigungsverfahren, welches zum einen in der Halbleiterfertigung etabliert ist, jedoch hinsichtlich seiner Genauigkeit Anforderungen stellt, die immer noch eine vergleichsweise kostengünstige Produktion erlauben.

Bei einer besonders bevorzugten Weiterbildung der Erfindung werden die Spalten und Linien der Halbleiterbauelemente mittels bi-subnominalem-Ätzverfahren hergestellt, welches ermöglicht, besonders schmale Strukturen zu erzeugen, die mit herkömmlichen Etching-Verfahren und den dazugehörigen Masken nicht erreicht werden können. Diese Maßnahme zur Herstellung ermöglicht insbesondere, die Sensorvorrichtung gemäß der Erfindung als voll integriertes System-on-Chip zur Verfügung stellen zu können.

Eine erfindungsgemäße Detektionsvorrichtung zeichnet sich dadurch aus, dass eine Sensorvorrichtung gemäß der Erfindung vorgesehen ist. Die Detektionsvorrichtung kann beispielsweise als Überwachungseinrichtung dienen, welche die Bewegung eines Bewegungselementes, etwa eines Tors oder einer Tür, überwacht. Dabei sollen Kollisionen mit Objekten vermieden werden, etwa wenn Personen in einen Türspalt eingreifen und die Gefahr von Quetschungen besteht oder sonstige Gegenstände eingeklemmt werden, wobei auch der Antrieb der Tür dabei Schaden nehmen könnte.

Der Chip gemäß der Erfindung kann zum Beispiel auf eine Leiterplatte gelötet werden. Die Leiterplatte kann etwa mit der Spannungsversorgung ausgestattet sein. Falls eine aktive Beleuchtung notwendig ist, kann die Leiterplatte gegebenenfalls auch eine Lichtquelle, wie z.B. Leuchtdioden tragen. Denkbar ist grundsätzlich eine Verwendung der Sensorvorrichtung in verschiedensten Sensoreinrichtungen.

### Ausführungsbeispiel:

Ein Ausführungsbeispiel der Erfindung ist in den Zeichnungen dargestellt und wird nachstehend unter Angabe weiterer Einzelheiten und Vorteile näher erläutert.

Im Einzelnen zeigen:
- Figur 1: eine schematische Darstellung einer Sensorvorrichtung (SoC) gemäß der Erfindung;
- Figur 2: eine schematische Darstellung der Zusammensetzung der Sensorvorrichtung mit PCB gemäß der Erfindung;
- Figur 3: eine handelsübliche 2-Poly-Flash-Speicher-Zelle (EEPROM);
- Figur 4: eine schematische Darstellung (gedanklich) des Übergangs von der 2-Poly-Flash-Zelle zur Einzel-Poly-Flash-Zelle;
- Figur 5: eine schematische Darstellung eines 1-Poly-EEPROMs;
- Figuren 6 bis 17: den Ablauf eines bi-subnominal-Etching-Verfahren von Halbleiterbauelementen auf einem Substrat mit Strukturbreiten, die unter den kritischen Dimensionen liegen anhand schematischer Schnittbilder.
- Figuren 18 bis 29: eine Variante des Ätzverfahren gemäß Fig. 6 bis 17.

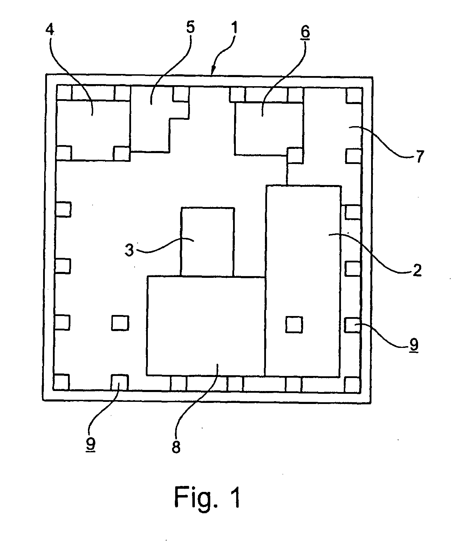

Figur 1 zeigt eine schematische Darstellung einer Draufsicht auf eine Sensorvorrichtung 1 gemäß der Erfindung, die als voll integriertes System-on-Chip ausgebildet ist. Der gesamte Chip 1, wie er in Figur 1 dargestellt ist, besitzt eine Größe von 2,55 mm x 2,55 mm (wobei: mm: Abkürzung für Millimeter). Im einzelnen sind lediglich die Bereiche, in denen wesentliche Module angeordnet sind dargestellt; sonstige Elektronik, Leiterbahnen oder dergleichen, die ohnehin in der Zeichnungsgröße im Einzelnen nur schwierig dargestellt werden können, sind in Figur 1 weggelassen. Der schematisch dargestellte Bestückungsplan zeigt unter anderem folgende Module und Schaltkreiskomponenten, nämlich die Digitaldomain 2 zur Signalverarbeitung, die Pixelmatrix 3 zur Detektion, den Spannungswandler (charge pump) 4, den Treiber für die Leuchtdiode (LED) 5, das EEPROM 6 zur Speicherung von Konfigurationsparametern, ein Modul 7, das sowohl einen Schwingkreis (PLL, Phase-locked loop) als auch eine Vorrichtung zum Messen und Regulieren der Phasenverschiebung zwischen LED und LED-Treiber (DLL, Delay-locked loop) umfasst.

Des Weiteren ist ein Modul dargestellt, welches Anteile von analoger und digitaler Schaltkreiskomponente aufweist, nämlich der A-/D-Wandler 8. Ferner sind Kontaktflächen 9 dargestellt. Der in Figur 1 dargestellte System-on-Chip 1, welcher in 1-Poly-Technologie gefertigt ist, ist die besonders bevorzugte Ausführungsform der Erfindung. Für Überwachungszwecke kann die Pixelmatrix 8 x 8 Pixel umfassen. Jedes Pixel kann unabhängig von den anderen arbeiten. Ferner hat jedes Pixel wiederum zwei Ausgangskanäle, welche ausgelesen und analysiert werden können, um den relativen Phasenversatz zur Phase des ausgesendeten Lichts zu ermitteln. Bei Überwachungssensor ist es im Grunde ausreichend, eine einzelne Distanz zu vermessen, sodass es genügt, einen Mittelwert über die vorhandenen Pixel und deren ausgelesenen Informationen zu bilden. Die einzelnen Pixel können auch unterschiedlich gewichtet werden.

Für die dargestellte Ausführungsform des Chips 1 genügt eine einzelne Spannungsquelle, welche eine Spannung von 8,5 V zur Verfügung stellt, da weiter benötigte Spannungen über integrierte Spannungswandler bereitgestellt werden. Da der Sensor mit einer aktiven Beleuchtung arbeitet, dass heißt selbst über eine Lichtquelle verfügt, welche zur Detektion eingesetzt wird, sind im vorliegenden Fall als Leuchtmittel typischer Weise 1 bis 3 LEDs notwendig. Die Distanz kann beispielsweise über PWM (Pulz with modulation) oder über ein SPI-Register ausgelesen werden. Befehle und setzen der Register kann über SPI-Protokoll erfolgen.

Der Einsatz von CCD-Struktur ermöglicht insbesondere dass die Ladungsträgerpakete in kurzer Zeit beeinflusst bzw. detektiert werden können. Dies ist besonders wichtig im Zusammenhang mit dem Einsatz von TOF-Sensoren, da diese typischer Weise Detektionen im Bereich von einigen Nanosekunden leisten müssen. Im Wesentlichen wird die Antwort auf einen kurzen ausgesendeten Lichtpuls der LED dabei aufgezeichnet und vermessen. Der Sensorchip 1 ermöglicht zudem auch, Distanzmessungen in Bezug auf Gegenstände mit unterschiedlichem Reflexionsvermögen vorzunehmen. Die Entfernung kann dabei von einigen Zentimetern bis mehreren Metern typischerweise betragen.

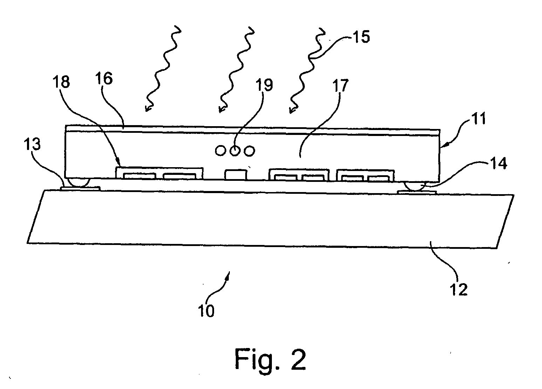

Figur 2 zeigt eine schematische Darstellung einer Sensorschaltung 10 mit einer Sensorvorrichtung als Chip 11, der auf einer Leiterplatte 12 (PCB, printed circuit board) aufgebracht ist. Zur Kontaktierung ist der Chip 11 direkt auf der Leiterplatte 12 aufgelötet. Auf der Leiterplatte 12 stehen zur Kontaktierung so genannte Pads 13 zur Verfügung. Diese Pads 13 oder Kontaktflecken stellen die Verbindung zu weiteren Leiterbahnen her. Der Chip 11 wird auf den Pads 13 über Lotkugeln (solder balls) 14 angebracht. Im Sensorbereicht wird der Chip 11 von der Sensorrückseite her beleuchtet. Die einfallenden Photonen 15 treffen dabei zunächst auf eine Schicht aus Filtermaterial und Mikrolinsen 16. Darunter wiederum befindet sich das Bulkmaterial 17, welches im Wesentlichen aus in Zonenziehverfahren gewonnenem Silizium (Engl.: float-zone silicon) besteht. Die elektronischen Schaltkreise 18, welche unter anderem zur Detektion dienen, befinden sich auf der nicht beleuchteten Seite des Sensors (der eigentlichen "Vorderseite" des Halbleiterbauelements), welche der Leiterplatte 12 zugewandt ist. Der Bereich des Bulkmaterials 17 in welchen die einfallenden Photonen 15 gelangen liegt als völlige Verarmungszone vor. Die Photonen 15 wiederum erzeugen Ladungsträger 19 im Bulkmaterial 17, welche wiederum von den Schaltkreisen 18 des Sensors detektiert werden können.

Die Quantenausbeute eines Photodetektors hängt im Allgemeinen von folgenden vier Faktoren ab:
- Absorbtionseigenschaften des Bulkmaterials (dass heißt von Silizium);
- der Dicke der nicht empfindlichen Schicht, in der kurze Rekombinationszeiten der erzeugten Ladungsträger vorherrschen (Diese Rekombinationszeiten sind besonders für den UV-Bereich mit kurzen Wellenlängen der limitierende Faktor);

- der Dicke der Verarmungszone, welche ein Abschneiden im langwelligen Bereich bedeutet;
- von den Reflektionseigenschaften der Oberfläche.

Insbesondere bei Anwendungen im Überwachungsbereich wird vielfach eine Detektion im Infrarotbereich verwendet. Eine Verbesserung im UV-Bereich kann beispielsweise dadurch erfolgen, indem die Nachbehandlung auf der Rückseite für ultradünne, unempfindliche Schichten optimiert wird. Im UV-Bereich beträgt die Absorbtionslänge in Silizium nur wenige Nanometer. Ein solcher Optimierungsschritt hat grundsätzlich jedoch nichts mit dem verwendeten CMOS-Prozess zu tun. Gleiches gilt für die Oberflächeneigenschaften auf der Detektionsseite, der Rückseite der Halbleiterstruktur, d.h. insbesondere für das Reflexionsvermögen des Detektionsfensters. Der in Figur 2 dargestellte Sensor besitzt insbesondere den Vorteil, dass durch die Beleuchtung von der Rückseite grundsätzlich eine große Fläche zur Verfügung steht. Als Bulkmatieral bzw. als Grundbestandteil wird im Ziehverfahren gewonnenes Silizium verwendet. In der analogen Schaltkreiskomponente kann mit Spannungen in der Größenordnung bis 12 V gearbeitet werden.

Die vorgeschlagene Sensorvorrichtung ermöglicht eine Quantenausbeute in einem Wellenlängenbereich von 520 nm bis 900 nm von mehr als 80 %. Die zeitliche Genauigkeit liegt dabei sogar im Sub-Nanosekundenbereich. Die Sensorvorrichtung kann mit einer Geschwindigkeit von bis zu 100 Frames pro Sekunde betrieben werden.

Bei einer gegenwärtigen Ausführungsform besitzt der gesamte Sensor zusammen mit der Leiterplatte eine Größe von 17 mm x 28 mm, wobei in diesem Fall die Spannungsversorgung, die Steuerung und zwei LEDs zur aktiven Beleuchtung bereits mit inbegriffen sind. Der Sensor eignet sich damit insbesondere auch für Anwendungen im Überwachungsbereich, sodass kleine, unauffällige Überwachungssensoren eingesetzt werden können.

Darüber hinaus besitzt die Sensorvorrichtung einen vergleichsweise geringen Energieverbrauch. Ein besonders kritischer Faktor bezüglich des Energieverbrauchs ist die aktive Beleuchtung zur Entfernungsmessung mittels TOF-Sensor. Wird die Beleuchtung viel zu schwach gewählt, leidet mitunter die Genauigkeit der Entfernungsmessung. Bei der vorliegenden Ausführung reicht eine Energie von nur 30 fJ (Femtojoule) pro Pixel aus um ein Signal von ca. 100 000 Elektronen zu erzeugen und somit bei einer Wellenlänge von 850 nm des einfallenden Lichts einer Quantenausbeute von 80 % zu erreichen. Insgesamt brauchen die LEDs typischer Weise nur 50 % der benötigten Integrationszeit eingeschaltet zu sein.

TOF-Sensoren zeichnen sich gerade dadurch aus, dass ermöglicht wird, den durch Umgebungslicht (zum Beispiel Sonnenlicht) erzeugten Untergrund zu reduzieren. Dies ermöglicht zum einen eine besonders präzise Messung, aber auch wiederum, den Energieverbrauch zu erniedrigen, da die aktive Beleuchtung grundsätzlich schwächer gewählt werden kann.

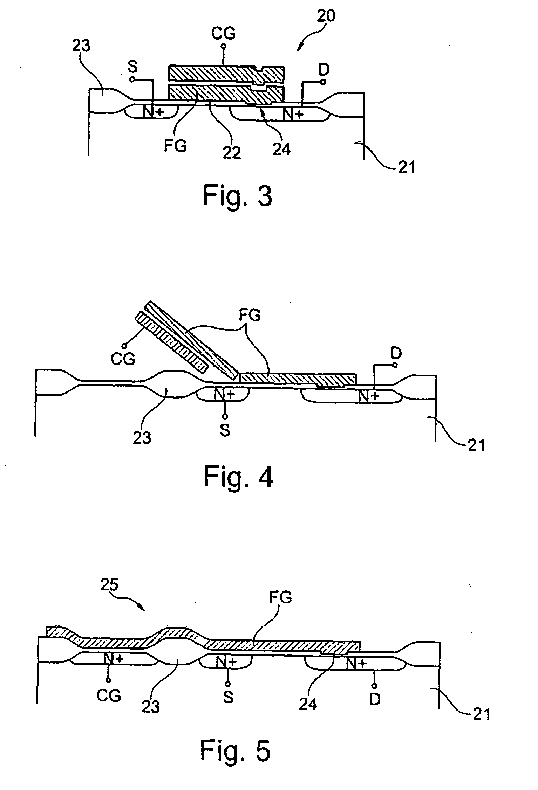

Figuren 3 bis 5 zeigen einen nicht flüchtigen Speicher in Form eines EEPROMS 20. Der EEPROM 20 ist in Figur 3 zunächst in 2-Poly-Technologie gefertigt. Die Halbleiterstruktur besitzt die Anschlüsse Source S, Drain D sowie als Steueranschluss ein Control-Gate CG. Die Doppelstruktur aus Polysilizium umfasst im Bereich des Gates die Kontaktierung des Control-Gates CG und gestapelt darunter ein so genanntes Floating-Gate FG. Dieses Floating-Gate FG dient der Speicherung von Ladungen und somit der Speicherung von Information. Im vorliegenden Fall befindet sich die Gate-Struktur auf einem Bulkmaterial 21 (hier: p-Substrat). Das Floating-Gate FG ist vom Bulkmaterial 21 über ein Gateoxid 22 abgetrennt. Im Randbereich ist die Speicherzelle durch ein so genanntes Feldoxid 23 isoliert. Ferner ist ein Tunneloxid vorgesehen. Die Ladung, die im Floating-Gate FG gespeichert werden soll, kann über Tunneleffekt beeinflusst werden. Die Anschlüsse im Bereich Source S und Drain D sind jeweils als hochdotierte (n+)-Schicht N+ ausgebildet (n: negative Dotierung, "+" bedeutet hohe Dotierung).

Figur 4 zeigt, wie gedanklich der Übergang von der 2-Poly-Struktur zur 1-Poly-Struktur erfolgt. Die Doppelstruktur wird gewissermaßen im Bereich des Floating-Gates FG "aufgetrennt" und "zur Seite geklappt". Ansonsten entspricht die gedachte Struktur aus Figur 4 im Allgemeinen der Struktur aus Figur 3.

Figur 5 zeigt schließlich die 1-Poly-Struktur des EEPROMs 25. Diese Flash-Speicherzelle besitzt keine doppelte Schichtstruktur mehr. Außerhalb der Source-Drain-Strecke S - D ist, über ein Feldoxid 23 des Control-Gate als vergrabene hochdotierte (n+)-Schicht vorhanden (buried control gate). Das Control-Gate CG befindet sich unter einem Gateoxid, wobei darüber wiederum schließlich das Floating-Gate FG angeordnet ist. Über die Ansteuerung des Conrol-Gates CG erfolgt schließlich eine Beeinflussung des Floating-Gates FG, die ihrerseits dafür sorgt, dass die Source-Drain-Strecke S-D ihren Widerstand ändert. Die zu speichernde Information kann entsprechend codiert werden.

### Bi-subnominal etching:

Es handelt sich dabei um ein Verfahren zur Herstellung von Halbleiterbauelementen auf einem Substrat mit fotolithographischen Strukturierungsschritten, bei welchem auf dem Substrat eine erste zur strukturierende Schicht und eine für die erste zu strukturierende Schicht als Maskenschicht dienende zweite Schicht aufgebracht wird. Zudem wird eine als Maske für die zweite Schicht dienende dritte Schicht aufgebracht und nacheinander zumindest zwei fotolithographische Strukturierungsprozesse für die zweite Schicht durchgeführt, wobei bei einem der Strukturierungsprozesse nach der Erzeugung einer Struktur aus einer fotoempfindlichen Schicht zur Bereitstellung einer Maskenschicht für einen Strukturierungsprozess an der dritten Schicht, an den Strukturierungsrändern der dritten Schicht positive Rampenwinkel erzeugt werden, wodurch sich die freibleibenden Strukturen bei einer Dicke h der dritten Schicht um einen Wert D=2*h/tanα verkleinern und wobei beim Anderem der Strukturierungsprozesse nach der Erzeugung einer Struktur aus einer fotoempfindlichen Schicht für die Bereitstellung einer Maskenschicht für einen Strukturierungsprozess an der dritten Schicht, an den Strukturierungsrändern der dritten Schicht negative Rampenwinkel β erzeugt werden, wobei sich die verbleibenden Strukturen bei einer Dicke h der dritten Schicht um einen Wert W-2*h/tanß verkleinern und wobei auf der Basis der jeweils strukturierten dritten Schicht eine Strukturierung der zweiten Schicht erfolgt.

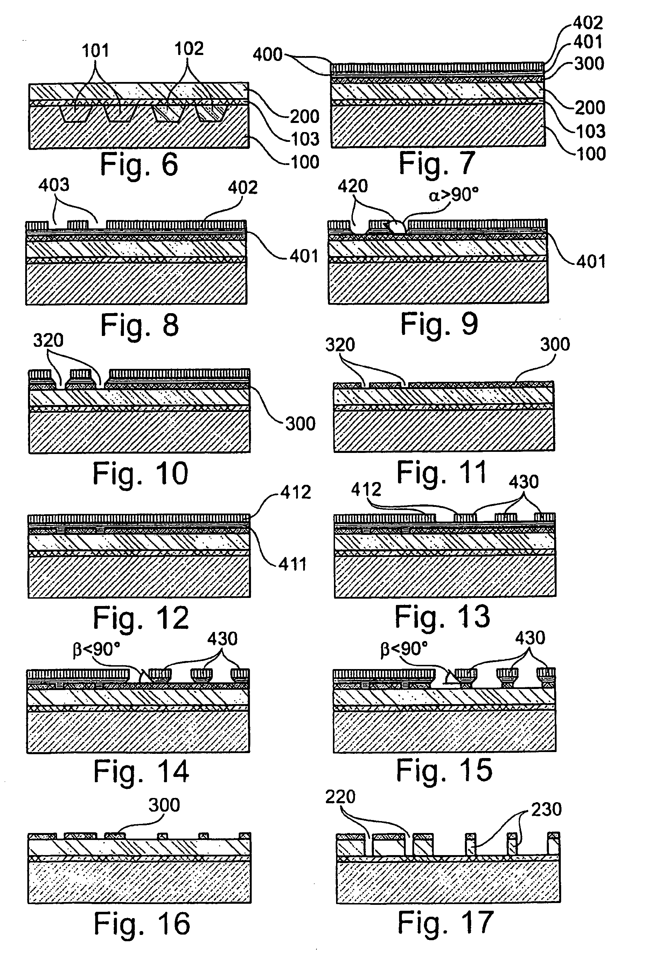

Ausgangspunkt ist z. B. ein Wafer 100 aus Silizium mit dotierten Bereichen 101, geätzten Strukturen 102, die z. B. als aktive Bereiche eines Transistors genutzt werden, bei welchem die Lücken zwischen den geätzten Strukturen mit Isolationsmaterial aufgefüllt sind, in Prozessen wie z. B. STI (shallow trench isolation) oder LOCOS (Local oxidation of silicon). Auf den Wafer 100 kann ein Dielektrikum 103 aufgebracht sein, das als Dielektrikum für Transistorstrukturen dient. Schließlich folgt auf diese Isolationsschicht eine Schicht aus z. B. Polysilizium, das später zur Herstellung des Gates der Transistoren genutzt wird, beispielsweise in einer Dicke von 200 nm. Die Polysiliziumschicht trägt das Bezugszeichen 200 (siehe Figur 6).

Auf die Schicht 200 wird im Weiteren eine Isolationsschicht, insbesondere eine Siliziumoxidschicht 300 aufgetragen. Diese Schicht sollte chemische Eigenschaften aufweisen, die unterschiedlich zu dem von der darunterliegenden Schicht 200 sind und weist z. B. eine Dicke von 50 nm auf. Damit kann diese Schicht nach ihrer Strukturierung als Maske für die Strukturierung der darunterliegenden Schicht eingesetzt werden.

Darauf wird ein Schichtstapel 400 aufgetragen, der aus verschiedenen Schichten bestehen kann, z. B. eine Antireflektionsbeschichtung 401 sowie eine Photolackschicht 402 aufweist(siehe Figur 7).

Die Photolackschicht wird strukturiert, um eine erste Maske für die darunterliegende Schicht 401 zu erhalten. Dabei werden nur die Strukturen in der Photolackschicht realisiert, mit welchen kleinere Spaltbreiten als die kritische Dimension kreiert werden sollen. Selbstverständlich kann dieser Maskenschritt auch genutzt werden, um Strukturen zu erzeugen, die größer als die minimale Struktur sind. Darüber hinaus können in diesem Maskenschritt Strukturen entstehen, die eine Größe der minimalen Linien im Hinblick auf deren kritische Dimension besitzen. Grundsätzlich wird beim fotolithographischen Prozess das Kriterium der minimalen Strukturbreite eingehalten. Die kleineren Strukturbreiten als die minimale Strukturbreite ergeben sich durch einen nachfolgenden Strukturierungsschritt auf der Grundlage eines fotolithographischen Prozesses im Bereich der minimal möglichen Strukturbreiten.

Letztlich verbleibt eine strukturierte Photolackschicht 402 mit Öffnungen 403 (siehe Figur 8). Mit dieser strukturierten Photolackschicht wird nunmehr die Schicht 401 strukturiert. Ein bevorzugter Ätzschritt findet vorteilhafterweise so statt, dass in der Schicht 401 an den Rändern der Strukturen ein positiver Rampenwinkel entsteht. Damit werden in der Schicht 401 Öffnungen 420 erzeugt, die im Wesentlichen einem konstanten Offset von D=2*h/tanα besitzen, wobei h die Dicke der Schicht 401 ist. Der Winkel α ist per Definition der Winkel, welcher von der schrägen Berandung der Schicht 401 und der Ebene des Wafers eingeschlossen wird. Das bedeutet, dass ein Winkel α von > 90° einem positiven Rampenwinkel entspricht, bei dem Öffnungen 420 mit reduzierter Größe entstehen, wogegen bei einem Winkel α < 90° ein negativer Rampenwinkel vorliegt, bei welchem Öffnungen in der Dimension sich vergrößern. In Figur 9 werden jedenfalls im vorliegenden Schritt Öffnungen 420 verkleinert. Der Rampenwinkel ist positiv (siehe Figur 9).

Mit der strukturierten Schicht 401 wird die darunterliegende Schicht 300 (Maskenschicht) strukturiert. Dadurch erhält man Strukturen 320 (Öffnungen) in der Schicht 300, die den Öffnungen 420 in der Schicht 401 an deren Schichtgrund entsprechen (siehe Figur 10 sowie Figur 11). In Figur 11 ist die Schicht 402 bzw. 401 vor dem nächsten Prozessschritt vollständig entfernt.

Gemäß Figur 12 wird eine Schicht 411 bzw. 412 aufgetragen, wobei die Schicht 411 der Schicht 401 und die Schicht 412 der Schicht 402 entspricht. Die Schicht 412 ist eine Photolackschicht, die entsprechend der Strukturen strukturiert wird, bei welchen eine kleinere Linienbreite erreicht werden soll, als eine Linienbreite, die nach der kritischen Dimension noch möglich ist (siehe Figur 13). In Figur 13 sind Linien 430 ersichtlich. Diese Linien 430 sind unter Nutzung der fotolithographischen Möglichkeiten größer oder gleich der minimalen Linienbreite.

Mit der strukturierten Schicht 412 mit Linien 430 wird die darunterliegende Schicht 411 strukturiert in einer Weise, dass negative Rampenwinkel entstehen. Dadurch verkleinern sich die verbleibenden Linien 430 um jeweils den Rampenwinkelbereich, d. h. die Linien werden um den Wert W=2*h/tanß kleiner, wobei β der Winkel zwischen der Substrat-Oberfläche und dem nach innen geneigten Rand ist (siehe Figur 14 und Figur 15).

Mit den strukturierten Linien 430 in der Schicht 411 wird die darunterliegende Schicht 300 erneut strukturiert, wobei die Breite der Linien am unteren Rand am Übergang zur Schicht 300 auf die darunterliegende Schicht 300 übertragen wird. Es entstehen subnominale Linienstrukturen, die kleiner sind als die fotolithographische Linienbreite.

Daraufhin werden die Schichten 412 und 411 vollständig entfernt und mit der strukturierten Schicht 300 ein erneuter Strukturierungsvorgang durchgeführt.

Die Schicht 300 enthält nun subnominale Spaltbreiten und subnominale Linienbreiten im Vergleich zu einer kritischen Dimension an den vorgegebenen Stellen. Natürlich kann die Schicht 300 größere Strukturen sowie Strukturen enthalten, die der kritischen Dimension entsprechen.

Mit der strukturierten Schicht 300 wird die darunterliegende Schicht 200, mit welchen die Gates der Transistoren hergestellt werden, strukturiert.

Anschließend ist es möglich, die Schicht 300 zu entfernen und es verbleibt eine strukturierte Polysiliziumschicht 200 mit subnominalen Spalten 220 und subnominalen Linien 230 (vgl. Fig. 17).

Anschließend kann ein herkömmlicher CMOS-Prozess durchgeführt werden.

Um die minimalen Strukturen zu nutzen, sollte im Folgenden eine Implantation zur Erzeugung von Source/Drain-Bereichen in den Bereichen subnominaler Spaltbreiten vermieden werden.

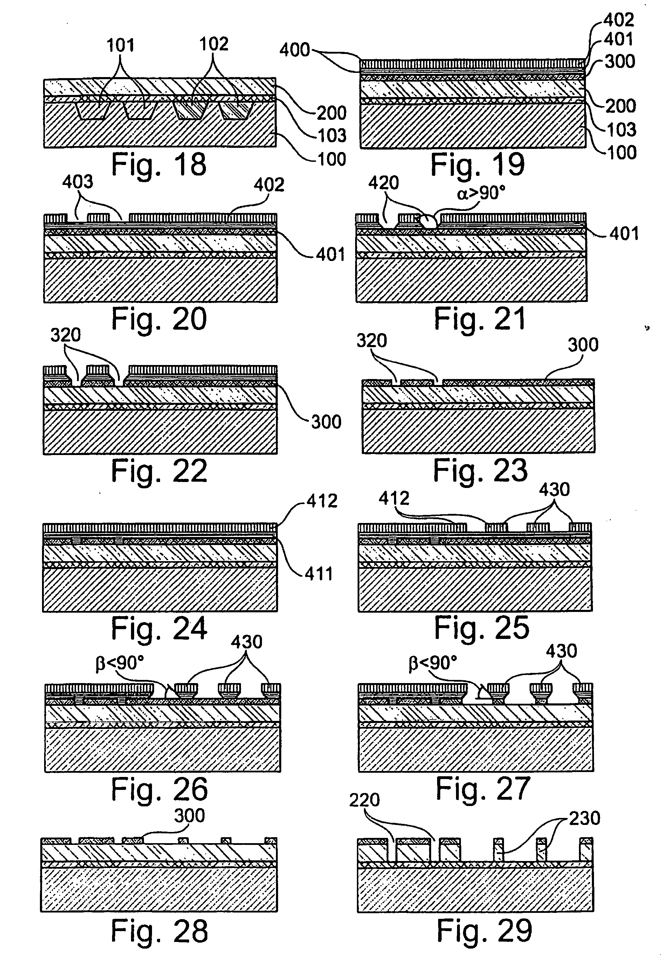

In der Variante des Ätzverfahrens gemäß den Figuren 18 bis 29 kommen die gleichen Schichten zur Anwendung, wie im Verfahren gemäß den Figuren 6 bis 17, weshalb für die Schichten und die Strukturen die gleichen Bezugszeichen verwendet werden. Unterschiedlich zum Herstellungsverfahren nach den Figuren 6 bis 17 ist im Herstellungsverfahren nach den Figuren 18 bis 29 die Prozessfolge und die Schichtfolge. Das Herstellungsverfahren, veranschaulicht von Figur 18 bis Figur 21, entspricht dem der Figuren 6 bis 9. Im Unterschied zum Verfahren gemäß der Figuren 6 bis 17 wird jedoch nicht mittels der strukturierten Schicht 401 die darunter liegende Maskenschicht 300 nach Erzeugung der Öffnungen 420 strukturiert, sondern die Fotolackschicht 402 vollständig entfernt (siehe Figur 22) und eine erneute Fotolackschicht (412) aufgetragen. Wie beim Verfahren gemäß der Figuren 1 bis 12 wird die Schicht 412 entsprechend der Strukturen strukturiert, bei welchen eine kleinere Linienbreite erreicht werden soll, als eine Linienbreite, die nach der kritischen Dimension fotolithographisch noch möglich ist. In Figur 24 sind Linien 430 ersichtlich. Diese Linien 430 sind unter Nutzung der fotolithographischen Möglichkeiten größer oder gleich der minimalen Linienbreite.

Mit der strukturierten Schicht 412 mit Linien 430 wird die darunter liegende Schicht 400 strukturiert in einer Weise, dass negative Rampenwinkel entstehen. Dadurch verkleinern sich die verbleibenden Linien 430 um jeweils den Rampenwinkelbereich (siehe Figur 25). Anschließend wird die Fotolackschicht 412 entfernt (siehe Figur 26), wobei eine strukturierte Schicht 401 verbleibt, mit welcher die darunter liegende Schicht 300 (Maskenschicht) strukturiert wird. Entsprechend der Breite der Öffnungen bzw. Linien am Schichtgrund werden diese Dimensionen im Strukturierungsprozess auf die Schicht 300 übertragen und zwar in einem einzigen Strukturierungsschritt, wogegen im Verfahren gemäß der Figuren 6 bis 17 zwei Strukturierungsschritte für die Schicht 300 zur Anwendung kommen.

Die strukturierte Schicht 300 ist in Figur 22 ersichtlich. Der weitere Prozessablauf gemäß der Figuren 23 und 24 entspricht dann wieder dem Prozessablauf gemäß der Figuren 16 und 17.

### Bezugszeichenliste:

- 1: System-on-Chip
- 2: Digitaldomain
- 3: Pixelmatrix
- 4: Spannungswandler
- 5: LED-Treiber
- 6: EEPROM
- 7: PLL-/DLL-Modul
- 8: A/D-Wandler
- 9: Kontaktfläche
- 10: Sensorschaltung
- 11: Chip
- 12: Leiterplatte
- 13: Pad
- 14: Lotkugel
- 15: Licht
- 16: Filterschicht mit Mikrolinsen
- 17: Bulkmaterial
- 18: Elektronikschaltkreise
- 19: Ladungsträger
- 20: 2-Poly-EEPROM
- 21: p-Substrat
- 22: Gateoxid
- 23: Feldoxid
- 24: Tunneloxid
- 25: 1-Poly-EEPROM
- 100: Wafer
- 101: dotierte Bereiche
- 102: Strukturen
- 103: Dielektrikum
- 200: Polysilizium
- 220: subnominale Spalte
- 230: subnominale Linie
- 300: Maskenschicht
- 320: Strukturen
- 400: Schichtstapel
- 401: BARC-Schicht
- 402: Photolack
- 403: Öffnung
- 411: BARC-Schicht
- 412: Photolack
- 420: Öffnung
- 430: Linie
- CG: Control-Gate
- D: Drain-Anschluss
- FG: Floating-Gate
- N+: (n+)-Schicht
- S: Source-Anschluss

## Patentansprüche

1. Sensorvorrichtung (1, 11), insbesondere Time-of-flight-(TOF-) und/oder CCD-Sensorvorrichtung für einen 3-D-Kamerasensor, die wenigstens eine analoge und eine digitale Schaltkreiskomponente sowie einen Analog-/Digital-Wandler (8) zum Wandeln analoger Signale der analogen Schaltkreiskomponente in digitale Signale für die digitale Schaltkreiskomponente (2) aufweist, wobei die analoge Schaltkreiskomponente sowie die digitale Schaltkreiskomponente jeweils wenigstens ein Modul zur elektronischen Ausführung einer Funktion umfassen, und wobei eines des wenigstens einen Moduls der analogen Schaltkreiskomponente als Sensoreinrichtung (3) zur Detektion elektromagnetischer Strahlung und eines des wenigstens einen Moduls der digitalen Schaltkreiskomponente als Signalverarbeitungseinrichtung zur Verarbeitung digitaler Signale ausgebildet ist, **dadurch gekennzeichnet, dass** die Schaltkreiskomponenten einschließlich dem Analog-/Digital-Wandler als integrierter Schaltkreis in einem Chip integriert sind und der Chip als Halbleiterstruktur in 1-Poly-Technologie gefertigt ist.

2. Sensorvorrichtung nach Anspruch 1, **dadurch gekennzeichnet, dass** wenigstens eines der Module der digitalen Schaltkreiskomponente als nicht-flüchtiger Speicher, insbesondere als EEPROM (6, 25) zum Speichern von Konfigurationsparametern ausgebildet ist.

3. Sensorvorrichtung nach einem der vorgenannten Ansprüche, **dadurch gekennzeichnet, dass** die digitale Schaltkreiskomponente in CMOS-Technologie gefertigt ist.

4. Sensorvorrichtung nach Anspruch 2 oder 3, **dadurch gekennzeichnet, dass** das EEPROM (6, 25) als FGFET ausgebildet ist.

5. Sensorvorrichtung nach Anspruch 4, **dadurch gekennzeichnet, dass** der FGFET eine Control-Gate-Struktur mit einer vergrabenen Schicht umfasst.

6. Sensorvorrichtung nach einem der vorgenannten Ansprüche, **dadurch gekennzeichnet, dass** in der analogen Schaltkreiskomponente subnominale Spalten und/oder in der digitalen Schaltkreiskomponente subnominale Linien ausgebildet sind.

7. Sensorvorrichtung nach einem der vorgenannten Ansprüche, **dadurch gekennzeichnet, dass** die digitale Schaltkreiskomponente wenigstens eines der folgenden Module umfasst:
- eine Vorrichtung (7) zur Kontrolle einer Phasenverschiebung, insbesondere eine DLL,
- einen Zeitgeberschwingkreis (7), insbesondere eine PLL.

8. Sensorvorrichtung nach einem der vorgenannten Ansprüche, **dadurch gekennzeichnet, dass** die analoge Schaltkreiskomponente wenigstens eines der folgenden Module umfasst:
- einen Sensor zur Detektion von Strahlung samt Struktur zum Transport von induzierten freien Ladungsträgern,
- einen Verstärker,
- einen Spannungsregler,
- einen Spannungswandler (4),
- einen Temperatursensor zur Erfassung und Korrektur temperaturbedingter Drift.

9. Sensorvorrichtung nach einem der vorgenannten Ansprüche, **dadurch gekennzeichnet, dass** die analogen Schaltkreiskomponenten für höhere Spannungen ausgelegt sind als die digitalen Schaltkreiskomponenten.

10. Sensorvorrichtung nach einem der vorgenannten Ansprüche, **dadurch gekennzeichnet, dass** die analogen und digitalen Schaltkreiskomponeneten Halbleiterbauelemente mit Oxidschichten zur elektrischen Isolierung, insbesondere mit einer Gateoxidschicht, umfassen, wobei wenigstens eine der Oxidschichten der analogen Schaltkreiskomponenten dicker ausgebildet ist als die der digitalen Schaltkreiskomponenten.

11. Sensorvorrichtung nach Anspruch 10, **dadurch gekennzeichnet, dass** die Gateoxidschicht der analogen Schaltkreiskomponente eine Dicke von 9 Nanometer bis 15 Nanometer, die Gateoxidschicht des EEPROM eine Dicke von 6 Nanometer bis 10 Nanometer und die Gateoxidschicht der übrigen digitalen Schaltkreiskomponente eine Dicke von 1,5 Nanometer bis 3 Nanometer aufweisen.

12. Sensorvorrichtung nach einem der vorgenannten Ansprüche, **dadurch gekennzeichnet, dass** der Analog-/Digital-Wandler (8) zum Wandeln analoger Signale der analogen Schaltkreiskomponente in digitale Signale für die digitale Schaltkreiskomponente (2) und umgekehrt ausgebildet ist, insbesondere zusätzlich als Digital-/Analog-Wandler.

13. Verfahren zur Herstellung einer Sensorvorrichtung nach einem der vorgenannten Ansprüche, **dadurch gekennzeichnet, dass** wenigstens ein Teil des Verfahrens ein 200-nm-CMOS-Fertigungsverfahren umfasst.

14. Verfahren nach Anspruch 13, **dadurch gekennzeichnet, dass** subnominale Spalten und/oder subnominale Linien mittels bi-subnominalem Ätzverfahren hergestellt werden.

15. Detektionsvorrichtung (10), insbesondere Überwachungsvorrichtung zur Überwachung der Bewegung eines Bewegungselementes gegen ungewollte Kollisionen mit einem Objekt, **dadurch gekennzeichnet, dass** eine Sensorvorrichtung nach einem der Ansprüche 1 bis 12 zur Erfassung des Objekts vorgesehen ist.

## Claims

1. Sensor device (1, 11), in particular a time-of-flight (TOF) and/or CCD sensor device for a 3D camera sensor, which comprises at least one analogue and one digital circuit component and an analogue/digital converter (8) for converting analogue signals of the analogue circuit component into digital signals for the digital circuit component (2), wherein the analogue circuit component and the digital circuit component each comprise at least one module for performing a function electronically, and wherein one of the at least one modules of the analogue circuit component is configured as a sensor device (3) for detecting electromagnetic radiation and one of the modules of the digital circuit component is configured as a signal processing device for processing digital signals, **characterised in that** the circuit components including the analogue/digital converter are integrated as an integrated circuit into a chip and the chip is produced as a semiconductor structure using 1-poly technology.

2. Sensor device according to claim 1, **characterised in that** at least one of the modules of the digital circuit component is configured as a non-volatile memory for storing configuration parameters, in particular an EEPROM (6, 25).

3. Sensor device according to one of the preceding claims, **characterised in that** the digital circuit component is produced using CMOS technology.

4. Sensor device according to claim 2 or 3, **characterised in that** the EEPROM (6, 25) is configured as an FGFET.

5. Sensor device according to claim 4, **characterised in that** the FGFET comprises a control gate structure with a buried layer.

6. Sensor device according to one of the preceding claims, **characterised in that** subnominal gaps are formed in the analogue circuit component and/or subnominal lines are formed in the digital circuit component.

7. Sensor device according to one of the preceding claims, **characterised in that** the digital circuit component comprises at least one of the following modules:
- a device (7) for controlling a phase shift, in particular a DLL,
- a timer oscillating circuit (7), in particular a PLL.

8. Sensor device according to one of the preceding claims, **characterised in that** the analogue circuit component comprises at least one of the following modules:
- a sensor for detecting radiation together with a structure for transporting induced free charge carriers,
- an amplifier,
- a voltage regulator,
- a voltage converter (4),
- a temperature sensor for detecting and correcting temperature-affected drift.

9. Sensor device according to one of the preceding claims, **characterised in that** the analogue circuit components are configured for higher voltages than the digital circuit components.

10. Sensor device according to one of the preceding claims, **characterised in that** the analogue and digital circuit components comprise semiconductor elements with oxide layers for electrical insulation, in particular with a gate oxide layer, wherein at least one of the oxide layers of the analogue circuit components is thicker than that of the digital circuit components.

11. Sensor device according to claim 10, **characterised in that** the gate oxide layer of the analogue circuit component has a thickness of 9 nanometers to 15 nanometers, the gate oxide layer of the EEPROM having a thickness of 6 nanometers to 10 nanometers and the gate oxide layer of the remaining digital circuit component having a thickness of 1.5 nanometers to 3 nanometers.

12. Sensor device according to one of the preceding claims, **characterised in that** the analogue/digital converter (8) is configured for converting analogue signals of the analogue circuit component into digital signals for the digital circuit component (2) and vice versa, in particular in addition as a digital/analogue converter.

13. Method for producing a sensor device according to one of the preceding claims, **characterised in that** at least part of the method comprises a 200 nm CMOS production method.

14. Method according to claim 13, **characterised in that** subnominal gaps and/or subnominal lines are produced by means of a bi-subnominal etching method.

15. Detection device (10), in particular a monitoring device for monitoring the movement of a movement element to prevent unwanted collisions with an object, **characterised in that** a sensor device is provided according to one of claims 1 to 12 for detecting the object.

## Revendications

1. Dispositif capteur (1, 11), en particulier dispositif capteur de temps de vol (TOF) et/ou CCD destiné à un capteur de caméra 3D, lequel dispositif capteur comprend au moins un composant de circuit analogique et un composant de circuit numérique ainsi qu'un convertisseur analogique/numérique (8) pour convertir des signaux analogiques du composant de circuit analogique en signaux numériques pour le composant de circuit numérique (2), le composant de circuit analogique et le composant de circuit numérique comportant chacun au moins un module pour l'exécution électronique d'une fonction, et le module ou l'un des modules du composant de circuit analogique étant conçu sous la forme d'un dispositif capteur (3) pour détecter un rayonnement électromagnétique et le module ou l'un des modules du composant de circuit numérique étant conçu sous la forme d'un système de traitement de signal pour traiter des signaux numériques, **caractérisé en ce que** les composants de circuit, y compris le convertisseur analogique/numérique, sont intégrés en tant que circuit intégré dans une puce et la puce est fabriquée sous la forme d'une structure à semi-conducteur selon la technologie 1-poly.

2. Dispositif capteur selon la revendication 1, **caractérisé en ce qu'**au moins un des modules du composant de circuit numérique est conçu comme une mémoire non volatile, en particulier comme une EEPROM (6, 25) destinée à mémoriser des paramètres de configuration.

3. Dispositif capteur selon l'une des revendications précédentes, **caractérisé en ce que** le composant de circuit numérique est fabriqué selon la technologie CMOS.

4. Dispositif capteur selon la revendication 2 ou 3, **caractérisé en ce que** l'EEPROM (6, 25) est conçue comme une FGFET.

5. Dispositif capteur selon la revendication 4, **caractérisé en ce que** la FGFET comporte une structure de grille de commande pourvue d'une couche enfouie.

6. Dispositif capteur selon l'une des revendications précédentes, **caractérisé en ce que** des colonnes sous-nominales sont formées dans le composant de circuit analogique et/ou des lignes sous-nominales sont formées dans le composant de circuit numérique.

7. Dispositif capteur selon l'une des revendications précédentes, **caractérisé en ce que** le composant de circuit numérique comporte au moins l'un des modules suivants :
- un dispositif (7) destiné à contrôler un décalage de phase, en particulier une DLL,
- un circuit oscillant d'horloge (7), en particulier une PLL.

8. Dispositif capteur selon l'une des revendications précédentes, **caractérisé en ce que** le composant de circuit analogique comporte au moins l'un des modules suivants :
- un capteur destiné à détecter un rayonnement ainsi que la structure de transport de porteurs de charge libres induits,
- un amplificateur,
- un régulateur de tension,
- un convertisseur de tension (4),
- un capteur de température destiné à détecter et à corriger une dérive due à la température.

9. Dispositif capteur selon l'une des revendications précédentes, **caractérisé en ce que** les composants de circuit analogiques sont conçus pour des tensions plus élevées que les composants de circuit numériques.

10. Dispositif capteur selon l'une des revendications précédentes, **caractérisé en ce que** les composants de circuit analogiques et numériques comportent des composants à semi-conducteur pourvus de couches d'oxyde destinées à l'isolation électrique, en particulier une couche d'oxyde de grille, au moins une des couches d'oxyde des composants de circuit analogiques étant plus épaisse que celle des composants de circuit numériques.

11. Dispositif capteur selon la revendication 10, **caractérisé en ce que** la couche d'oxyde de grille du composant de circuit analogique présente une épaisseur allant de 9 nanomètres à 15 nanomètres, la couche d'oxyde de grille du EEPROM présente une épaisseur allant de 6 nanomètres à 10 nanomètre et la couche d'oxyde de grille du reste du composant de circuit numérique présente une épaisseur allant de 1,5 nanomètre à 3 nanomètres.

12. Dispositif capteur selon l'une des revendications précédentes, **caractérisé en ce que** le convertisseur analogique-numérique (8) est conçu pour convertir des signaux analogiques du composant de circuit analogique en signaux numériques pour le composent de circuit numérique (2) et inversement, en particulier il est conçu en plus comme un convertisseur analogique/numérique.

13. Procédé de fabrication d'un dispositif capteur selon l'une des revendications précédentes, **caractérisé en ce qu'**au moins une partie du procédé comprend un procédé de fabrication en technique CMOS 200 nm.

14. Procédé selon la revendication 13, **caractérisé en ce que** des colonnes sous-nominales et/ou des lignes sous-nominales sont fabriquées au moyen d'un procédé de gravure bi-sous-nominal.

15. Dispositif capteur (10), en particulier dispositif de surveillance destiné à surveiller le déplacement d'un élément en mouvement pour l'empêcher d'entrer involontairement en collision avec un objet, **caractérisé en ce qu'**un dispositif capteur selon l'une des revendications 1 à 12 est prévu pour détecter l'objet.
